# EUROPEAN PATENT APPLICATION

(11) **EP 4 459 588 A1**
(43) Date of publication of application: **06.11.2024**
(21) Application number: 24166390.5
(22) Date of filing: 26.03.2024
(51) Int. Cl.: G08B 21/24, B60W 50/14, B60W 60/00

(54) **NOTIFICATION SYSTEM, VEHICLE CONTROL DEVICE, NOTIFICATION METHOD, AND STORAGE MEDIUM**

(30) Priority: 01.05.2023 JP 2023075862; 07.11.2023 JP 2023190386
(71) Applicant: TOYOTA JIDOSHA KABUSHIKI KAISHA, Aichi-ken 471-8571 (JP)
(72) Inventor: MANIWA, Yuta, Toyota-shi, 471-8571 (JP); FUJITA, Koichi, Toyota-shi, 471-8571 (JP); TOHYAMA, Jun, Toyota-shi, 471-8571 (JP); AKAHO, Daisuke, Toyota-shi, 471-8571 (JP); IZAWA, Natsumi, Kariya, 448-8650 (JP); SAWAI, Shunichiroh, Tokyo, 103-0022 (JP); NAKAMURA, Masahiko, Okazaki, 444-0873 (JP); AOKI, Kenichiro, Tokyo, 103-0022 (JP)
(74) Representative: J A Kemp LLP

(57) **Abstract**

A notification system (1) includes a mobile terminal (14) and a processor (20). The mobile terminal (14) receives notification information for a driver of a vehicle (10) and notifies the driver of the notification information. The processor (20) generates the notification information and transmits the notification information to the mobile terminal (14). The processor (20) causes the mobile terminal (14) to notify the driver of the notification information until an ending condition for ending notification is satisfied. The processor (20) changes the ending condition depending on urgency of the notification information.

## Description

### BACKGROUND OF THE INVENTION

### 1. Field of the Invention

The present disclosure relates to a notification system, a vehicle control device, a notification method, and a storage medium.

### 2. Description of Related Art

Japanese Unexamined Patent Application Publication No. 2020-102252 (JP 2020-102252 A) discloses a driver monitoring system that monitors a driver of a vehicle by communication being performed between a mobile terminal and a vehicle control device that controls the vehicle.

According to conditional automated driving, a situation is assumed in which a driver of a vehicle is temporarily relieved of the duty to pay attention to the road ahead, and is able to perform tasks other than driving operations, as typified by operating a mobile terminal such as a smartphone. In this case, the driver is required to be able to return to driving operations at any time in response to a request from the vehicle system. As such, using a mobile terminal to transmit notifications and requests from the vehicle system to the driver is conceivably effective. When all notifications are given to the driver in the same way, however, the driver may find the notifications bothersome and lose interest in the notifications, leading to a likelihood of overlooking important notifications relating to the vehicle more readily.

### SUMMARY OF THE INVENTION

The present disclosure provides a notification system, a vehicle control device, a notification method, and a storage medium that can reduce the occurrence of a case where a driver of a vehicle overlooks important notifications relating to the vehicle.

According to one aspect of the present disclosure, a notification system includes a mobile terminal and a processor. The mobile terminal is configured to receive notification information for a driver of a vehicle and notify the driver of the notification information. The processor is configured to generate the notification information, transmit the notification information to the mobile terminal, and cause the mobile terminal to notify the driver of the notification information until an ending condition for ending notification is satisfied. The processor is configured to change the ending condition depending on urgency of the notification information.

In the notification system, the processor changes the notification ending condition depending on the urgency of the notification information. The processor causes the mobile terminal to notify the driver of the notification information until the ending condition is satisfied. Accordingly, the driver can recognize the importance of the notification information. Thus, it is possible to reduce the occurrence of a case where the driver overlooks important notifications.

The processor may be configured to determine the urgency based on whether the notification information requires a response from the driver.

With the notification system, it is possible to reduce the occurrence of a case where the driver overlooks notifications that require a response from the driver.

The processor may be configured to determine the urgency based on a hazard level of an event.

With the notification system, it is possible to reduce the occurrence of a case where the driver overlooks notifications regarding events with a high hazard level.

When the urgency is equal to or higher than a certain level, the ending condition may include a vehicle operation performed by the driver.

With the notification system, it is possible to more effectively reduce the occurrence of the case where the driver of the vehicle overlooks important notifications regarding the vehicle.

When the urgency is equal to or higher than a certain level, the ending condition may include depression of a confirmation button displayed on a display device of the mobile terminal by the driver.

With the notification system, it is possible to more effectively reduce the occurrence of the case where the driver of the vehicle overlooks important notifications regarding the vehicle.

The processor may be configured to cause the mobile terminal to notify the driver based on order of priority of first notification information generated at the mobile terminal and second notification information regarding the vehicle.

With the notification system, it is possible to more effectively reduce the occurrence of the case where the driver of the vehicle overlooks important notifications regarding the vehicle and important notifications generated at the mobile terminal.

The notification system may include a notification device installed in the vehicle. The processor may be configured to transmit the notification information to the notification device. The processor may be configured to cause the notification device to end notification to the driver when the ending condition is satisfied.

With the notification system, it is possible to more effectively reduce the occurrence of the case where the driver of the vehicle overlooks important notifications regarding the vehicle and important notifications generated at the mobile terminal.

According to another aspect of the present disclosure, a vehicle control device includes a processor. The processor is configured to acquire notification information to be transmitted to a mobile terminal of a driver of a vehicle. The processor is configured to cause the mobile terminal to notify the driver of the notification information until an ending condition for ending notification is satisfied. The processor is configured to change the ending condition depending on urgency of the notification information.

Still another aspect of the present disclosure relates to a notification method for a notification system. The notification system includes a mobile terminal that receives notification information for a driver of a vehicle and notifies the driver of the notification information, and a vehicle control device that generates the notification information and transmits the notification information to the mobile terminal. The notification method includes causing the mobile terminal to notify the driver of the notification information until an ending condition for ending notification is satisfied, and changing the ending condition depending on urgency of the notification information.

Yet another aspect of the present disclosure relates to a non-transitory storage medium storing instructions. The instructions are executable by one or more processors of a notification system and cause the one or more processors to perform functions. The notification system includes a mobile terminal that receives notification information for a driver of a vehicle and notifies the driver of the notification information, and a vehicle control device that generates the notification information and transmits the notification information to the mobile terminal. The functions include causing the mobile terminal to notify the driver of the notification information until an ending condition for ending notification is satisfied, and changing the ending condition depending on urgency of the notification information.

According to the present disclosure, it is possible to reduce the occurrence of the case where the driver of the vehicle overlooks important notifications relating to the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram illustrating an example of a configuration of a notification system;
FIG. 2 is a block diagram illustrating an example of a hardware configuration of a vehicle control device;
FIG. 3 is a diagram illustrating an example of urgency data;
FIG. 4 is a diagram illustrating an example of urgency;
FIG. 5 is a diagram illustrating an example of notification information, events, user actions, and urgency;
FIG. 6 is a diagram illustrating an example of a relationship among events;
FIG. 7 is a diagram illustrating an example of urgency of notifications on a mobile terminal side;
FIG. 8 is a diagram illustrating an example of a case where urgency is divided into six levels;
FIG. 9 is a block diagram illustrating an example of a hardware configuration of the mobile terminal;
FIG. 10 is a block diagram illustrating an example of a functional configuration of the vehicle control device;
FIG. 11 illustrates an example of information provided from the mobile terminal to a vehicle;
FIG. 12 is a diagram illustrating an example of a notification state of the mobile terminal;
FIG. 13 is a diagram illustrating an example of a notification state of the mobile terminal;
FIG. 14 is a diagram illustrating an example of a notification state of an in-vehicle display device;
FIG. 15 is a diagram illustrating an example of a notification state of the mobile terminal;
FIG. 16 is a block diagram illustrating an example of a functional configuration of the mobile terminal;
FIG. 17 is a flowchart illustrating an example of notification control processing executed by the vehicle control device;
FIG. 18 is a flowchart illustrating an example of notification processing executed by the mobile terminal;
FIG. 19 is a diagram illustrating an example of directionality of notification information exchanged in the notification system;
FIG. 20 is a diagram illustrating a first example of stratification of urgency;
FIG. 21A is a diagram illustrating examples of first notification information associated with areas A-1 to A-2 in FIG. 20, events for which a notification of the first notification information is given, and user actions that are required in response to the given notification of the first notification information;
FIG. 21B is a diagram illustrating examples of first notification information associated with areas A-3 to A-5 in FIG. 20, events for which a notification of the first notification information is given, and user actions that are required in response to the given notification of the first notification information;
FIG. 22 is a diagram illustrating a second example of stratification of urgency; and
FIG. 23 is a diagram illustrating examples of second notification information associated with areas B-1 to B-3 in FIG. 22, events for which a notification of the second notification information is given, and user actions at the time of giving the notification of the second notification information.

### DETAILED DESCRIPTION OF EMBODIMENTS

Embodiments of the present disclosure will be described below in detail with reference to the drawings.

### First Embodiment

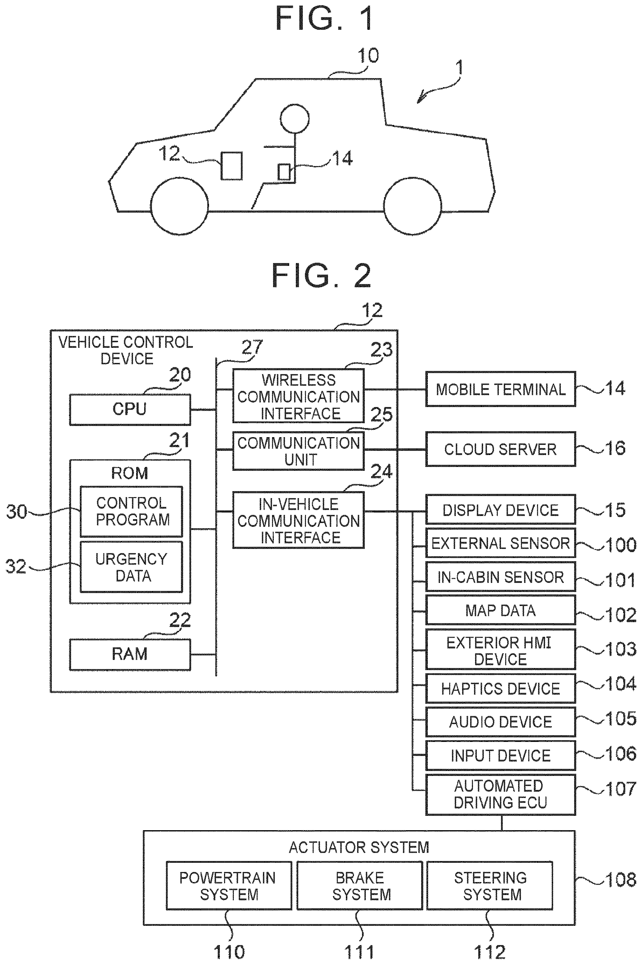

First, the configuration of a notification system 1 according to a first embodiment will be described with reference to FIG. 1. As illustrated in FIG. 1, the notification system 1 includes a vehicle control device 12 provided inside a vehicle 10, and a mobile terminal 14 carried by a driver into the vehicle 10. Examples of the vehicle control device 12 include a computer such as an electronic control unit (ECU). Examples of the mobile terminal 14 include a computer such as a smartphone, a tablet terminal, or a smart watch. The vehicle control device 12 according to the present embodiment is applied to an autonomous vehicle that enables switching between automated driving and manual driving.

The mobile terminal 14 can receive and make notification of notification information regarding the vehicle 10. The vehicle control device 12 generates notification information for the driver of the vehicle 10, and transmits it to the mobile terminal 14. This notification information is information that is given to the driver during execution of automated driving.

Next, a hardware configuration of the vehicle control device 12 according to the present embodiment will be described with reference to FIG. 2. The vehicle control device 12 includes a central processing unit (CPU) 20, a read-only memory (ROM) 21, a random-access memory (RAM) 22, a wireless communication interface 23, an in-vehicle communication interface 24, and a communication unit 25. The CPU 20, the ROM 21, the RAM 22, the wireless communication interface 23, the in-vehicle communication interface 24, and the communication unit 25 are connected to each other via a bus 27 so as to communicate with each other.

The CPU 20 is a central processing unit that executes various programs and controls various parts. That is, the CPU 20 reads programs from the ROM 21 and executes the programs using the RAM 22 as a work area.

The ROM 21 serves as a storage unit, and stores various programs and various types of data. In the present embodiment, the ROM 21 stores a control program 30 and urgency data 32. The RAM 22 serves as a work area, and temporarily stores programs and data.

The wireless communication interface 23 is an interface for connecting to the mobile terminal 14 by wireless communication. In the present embodiment, a configuration in which the vehicle control device 12 and the mobile terminal 14 directly communicate with each other will be described as an example, but the disclosed technology is not limited to this configuration. For example, the vehicle control device 12 and the mobile terminal 14 may communicate with each other via a server computer provided on a network.

The in-vehicle communication interface 24 is an interface for connecting to in-vehicle equipment such as a display device 15, an external sensor 100, an in-cabin sensor 101, map data 102, an exterior human-machine interface (HMI) device 103, a haptics device 104, an audio device 105, an input device 106, and an automated driving ECU 107. The interface uses a communication standard conforming to the controller area network (CAN) protocol.

The communication unit 25 is an interface for connecting to a network when communicating with an external server such as a cloud server 16. The interface uses a communication standard such as long-term evolution (LTE). The vehicle control device 12 can also communicate with the mobile terminal 14 via the cloud server 16.

The display device 15 displays messages under control of the vehicle control device 12. Examples of the display device 15 include a liquid crystal display provided in an instrument panel.

The external sensor 100 includes various sensors such as a camera, a radar device, and a millimeter-wave radar device that acquire various types of information regarding the surrounding environment of the vehicle 10. The in-cabin sensor 101 includes various sensors such as a driver monitoring camera that acquire various types of information on a vehicle cabin. The map data 102 is provided from an automotive navigation system or the like. The exterior HMI device 103 outputs various signals to people outside the vehicle, such as pedestrians and cyclists. The haptics device 104 provides tactile feedback to occupants of the vehicle 10 by applying force, vibration, movement, and so forth to the occupants by way of a device that causes vibration on seatbelts, or the like. The audio device 105 includes an audio output device such as a speaker. The input device 106 is a device including various switches and touch sensors for input to be performed by the occupants of the vehicle 10.

The automated driving ECU 107 controls automated driving of the vehicle 10. The term "automated driving" as used in the present embodiment means, for example, automated driving in which the vehicle 10 is the primary entity that performs driving, and means automated driving at Automated Driving Level 3 or higher, as defined by the Society of Automotive Engineers (SAE). The automated driving ECU 107 is configured to perform automated driving processing of Level 3 or higher. The automated driving ECU 107 is connected to an actuator system 108. The actuator system 108 includes a powertrain system 110, a brake system 111, and a steering system 112. The automated driving ECU 107 controls the powertrain system 110, the brake system 111, and the steering system 112.

The powertrain system 110 includes a powertrain that can generate driving force for driving wheels of the vehicle 10, and an ECU that controls actions of the powertrain. The brake system 111 includes a plurality of braking devices provided to the wheels of the vehicle 10. Examples of the braking devices include a hydraulic brake such as a disc brake that generates braking force using hydraulic pressure. The steering system 112 includes a steering device that can change a steering angle of steered wheels of the vehicle 10, and an ECU that controls actions of the steering device.

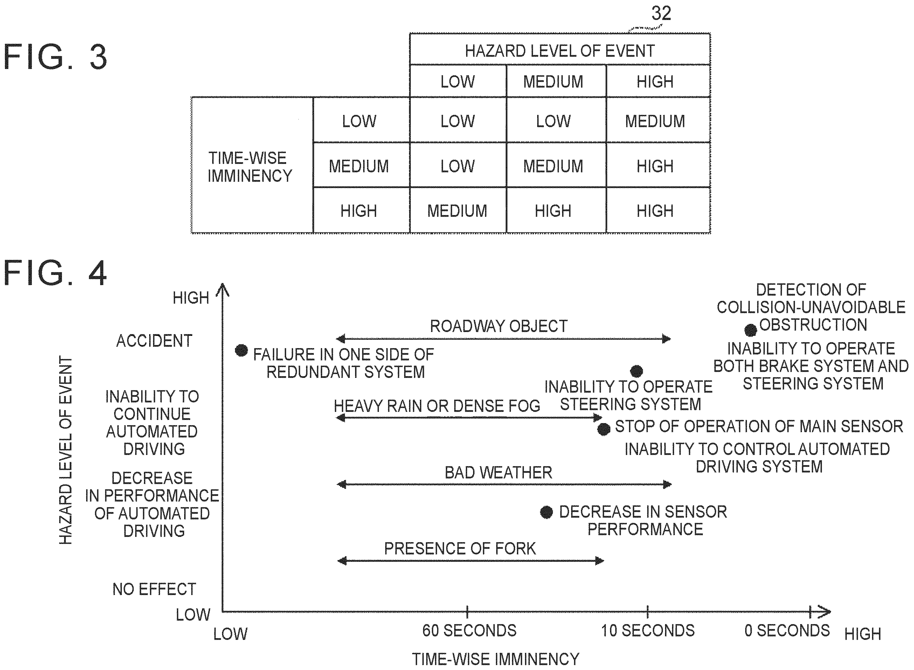

FIG. 3 illustrates an example of the urgency data 32. As illustrated in FIG. 3, the urgency data 32 includes urgency of notification information (hereinafter simply referred to as "urgency") that is stored in association with a combination of time-wise imminency until the driver responds and a hazard level of an event. This urgency represents the urgency of the response of the driver during execution of automated driving. In the present embodiment, the urgency increases as the time-wise imminency increases and as the hazard level of an event increases.

For example, as illustrated in FIG. 3, when the time-wise imminency is low and the hazard level of the event is low, the urgency is low. When the time-wise imminency is low and the hazard level of the event is medium, the urgency is low. When the time-wise imminency is low and the hazard level of the event is high, the urgency is medium. Thus, in the present embodiment, when the time-wise imminency is low and the hazard level of the event is low, for example, the urgency is low as with the time-wise imminency and the hazard level of the event. In the present embodiment, when the time-wise imminency is low and the hazard level of the event is medium, for example, the time-wise imminency is applied and the urgency is low. In the present embodiment, when the time-wise imminency is low and the hazard level of the event is high, for example, the urgency is medium halfway between the time-wise imminency and the hazard level of the event.

For example, as illustrated in FIG. 3, when the time-wise imminency is medium and the hazard level of the event is low, the urgency is low. When the time-wise imminency is medium and the hazard level of the event is medium, the urgency is medium. When the time-wise imminency is medium and the hazard level of the event is high, the urgency is high. Thus, in the present embodiment, when the time-wise imminency is medium and the hazard level of the event is low, for example, the hazard level of the event is applied and the urgency is low. In the present embodiment, when the time-wise imminency is medium and the hazard level of the event is medium, for example, the urgency is medium as with the time-wise imminency and the hazard level of the event. In the present embodiment, when the time-wise imminency is medium and the hazard level of the event is high, for example, the hazard level of the event is applied and the urgency is high.

For example, as illustrated in FIG. 3, when the time-wise imminency is high and the hazard level of the event is low, the urgency is medium. When the time-wise imminency is high and the hazard level of the event is medium, the urgency is high. When the time-wise imminency is high and the hazard level of the event is high, the urgency is high. Thus, in the present embodiment, when the time-wise imminency is high and the hazard level of the event is low, for example, the urgency is medium halfway between the time-wise imminency and the hazard level of the event. In the present embodiment, when the time-wise imminency is high and the hazard level of the event is medium, for example, the time-wise imminency is applied and the urgency is high. In the present embodiment, when the time-wise imminency is high and the hazard level of the event is high, for example, the urgency is high as with the time-wise imminency and the hazard level of the event.

In the example of FIG. 3, the urgency is divided into three stages, but the urgency may be divided into two stages, or may be divided into four or more stages. In the example of FIG. 3, the time-wise imminency is divided into three stages, but the time-wise imminency may be divided into two stages, or may be divided into four or more stages. In the example of FIG. 3, the hazard level of the event is divided into three stages, but the hazard level of the event may be divided into two stages, or may be divided into four or more stages. The urgency may be associated only with the hazard level of the event. The urgency may be determined depending on whether the notification information regarding the vehicle is information that requires the driver to respond. For example, a "medium" or "high" urgency is set for notification information that requires the driver to respond, and a "low" urgency is set for notification information that does not require the driver to respond.

As illustrated in FIG. 4 as an example, the hazard level of an event is determined based on weather conditions, obstructions, the state of each part constituting the vehicle 10, and information regarding a roadway. The vertical axis in FIG. 4 indicates the hazard level of the event, and the horizontal axis in FIG. 4 indicates the time-wise imminency. For example, in FIG. 4, hazard levels of events are set in ascending order as follows: an event that does not affect traveling of the vehicle 10, an event that adversely affects automated driving performance of the vehicle 10, an event that renders continued automated driving of the vehicle 10 impossible, and an accident event of the vehicle 10. In the case of a failure of the parts constituting the vehicle 10, the time-wise imminency is determined based on the degree of the failure. There are events in which the time-wise imminency is set based on the length of time until the event occurs, such as a collision with an obstruction, a change in weather, and reaching a fork in the roadway.

The hazard level of the event and the time-wise imminency are determined based on the acquired situation of the vehicle, the acquired situation of the surroundings, and so forth, and the urgency is associated, for example, on a map illustrated in FIG. 4. The urgency regarding the event changes as appropriate based on changes in the situation of the vehicle and the situation of the surroundings. For example, when dealing with roadway objects, changes in the weather, and roadway forks, the time-wise imminency increases as the vehicle travels and approaches the object (i.e., the time margin decreases). For example, assumption will be made that the vehicle control device 12 detects the occurrence of an event that will render automated driving of the vehicle 10 impossible to continue (e.g., heavy rain or dense fog). In this case, for example, whether there is a time margin of about 10 to 20 seconds until the event occurs is set as one of the boundaries between medium imminency and high imminency. That is, the value of about 10 to 20 seconds until the event occurs is one of the boundaries between medium urgency and high urgency. For example, whether there is a time margin of about 60 to 180 seconds until the event occurs is set as one of the boundaries between low imminency and medium imminency. That is, the value of about 60 to 180 seconds until the event occurs is one of the boundaries between low urgency and medium urgency.

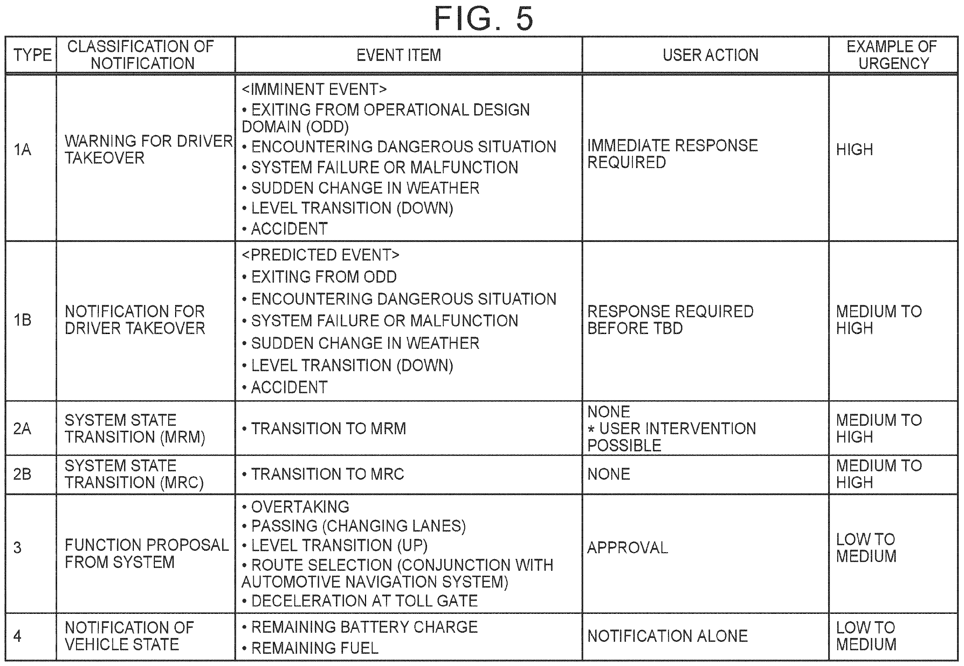

FIG. 5 illustrates an example of classification of notification information, events, user actions as to the notification information, and urgency.

As illustrated in FIG. 5, the classification of notification information according to type 1A is a warning for driver takeover. An event item for which notification of this notification information is given is an "imminent event" such as exiting from an operational design domain (ODD) or encountering a dangerous situation. For example, when the vehicle control device 12 detects exiting from the operational design domain, notification of this notification information is given. The user, specifically, the driver, at this time needs to immediately respond to the notification information to resume the manual driving mode. The urgency of this notification information is high.

As illustrated in FIG. 5, the classification of notification information according to type 1B is a notification for driver takeover. An event item for which notification of this notification information is given is a "predicted event" such as a system failure or malfunction or a sudden change in weather. For example, when the vehicle control device 12 detects a system failure, the notification of this notification information is given. In response to this notification information, the driver needs to take action to resume the manual driving mode by a determined cutoff time (to be determined (TBD)), specifically, by the time that the driver takeover is determined upon. The urgency of this notification information is medium to high.

As illustrated in FIG. 5, the classification of notification information according to type 2A is system state transition (minimal risk maneuver (MRM)). An event item for which notification of this notification information is given is transitioning to an MRM. For example, when the vehicle control device 12 determines to transition to an MRM, the notification of this notification information is given. The action of the driver required for this notification information is "none". That is, the driver does not need to take any action when the notification of this notification information is given. The urgency of this notification information is medium to high. Alternatively, the driver may be requested to take some action when the notification of this notification information is given.

As illustrated in FIG. 5, the classification of notification information according to type 2B is system state transition (minimal risk condition (MRC)). An event item for which notification of this notification information is given is transitioning to an MRC. For example, when the vehicle control device 12 determines to transition to an MRC, the notification of this notification information is given. The action of the driver required for this notification information is "none". That is, the driver does not need to take any action when the notification of this notification information is given. The urgency of this notification information is medium to high.

As illustrated in FIG. 5, the classification of notification information according to type 3 is a function proposal from the system. An event item for which notification of this notification information is given is a function proposal from the system, such as overtaking or passing (changing lanes). For example, when the vehicle control device 12 proposes execution of overtaking, the notification of this notification information is given. In response to this notification information, the driver needs to approve execution of the proposed function. The urgency of this notification information is low to medium.

As illustrated in FIG. 5, the classification of notification information according to type 4 is a notification of the vehicle state. An event item for which notification of this notification information is given is the remaining battery charge or the remaining fuel. For example, when the vehicle control device 12 detects a predetermined remaining battery charge, the notification of this notification information is given. This notification information is only a notification, and the action of the driver required for this notification information is "none". That is, the driver does not need to take any action when the notification of this notification information is given. The urgency of this notification information is low to medium.

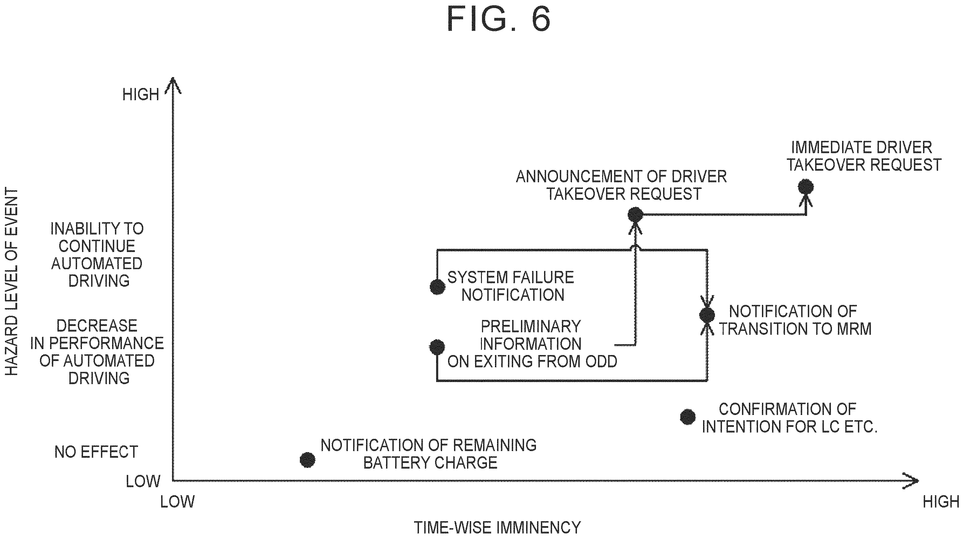

FIG. 6 is a diagram illustrating an example of a relationship among events. For example, as illustrated in FIG. 6, "notification of system failure" and "notification of transition to MRM" are mutually related. Specifically, "notification of transition to MRM" is connected by an arrow extending from "notification of system failure". In this case, the vehicle control device 12 gives "notification of system failure" as notification information, and then gives "notification of transition to MRM" as related notification information when the time-wise imminency is high.

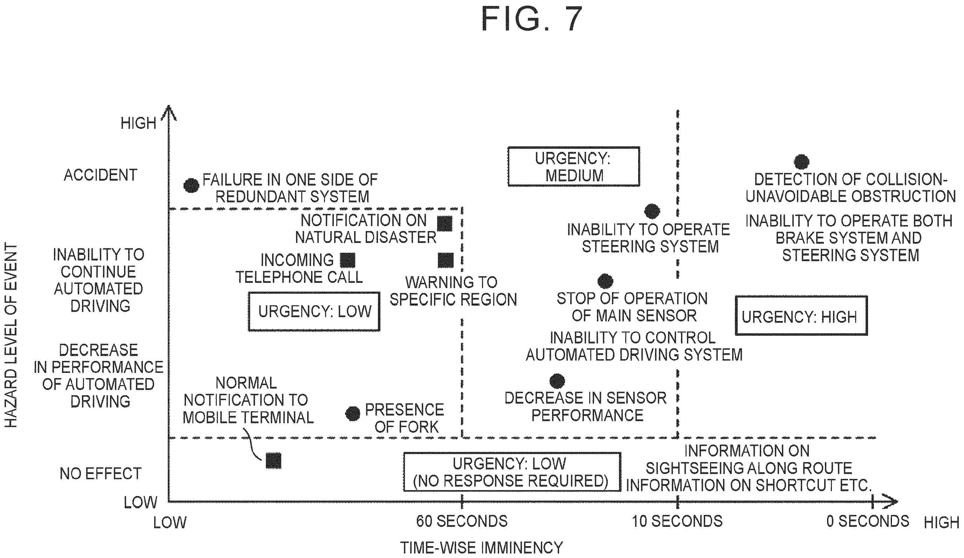

FIG. 7 illustrates an example of urgency of notifications on the mobile terminal 14 side in association with FIG. 4. In FIG. 7, urgency of the notification on the mobile terminal 14 side is represented by black rectangles. In FIG. 7, urgency of the notification on the vehicle 10 side is represented by black circles. Dashed straight lines in FIG. 7 represent boundaries of urgencies.

For example, in FIG. 7, "low (no response required)" and "low" are provided as the urgency of the notification on the mobile terminal 14 side. The urgency of "low" is higher than the urgency of "low (no response required)". For example, the urgency of "low (no response required)" includes normal notifications at the mobile terminal 14, such as decrease in remaining battery charge and schedule notifications. No response by the driver is required for the urgency of "low (no response required)". For example, the urgency of "low" includes an incoming call to the mobile terminal 14. In response to the incoming call to the mobile terminal 14 with the urgency of "low", the driver may conceivably respond, for example, by answering the call or hanging up the call.

For example, in FIG. 7, "low", "medium", and "high" are provided as the urgency of the notification on the vehicle 10 side. The urgency increases in the order of "low", "medium", and "high". For example, the urgency of "low" includes "fork ahead" that is notification of the presence of a fork in the travel route of the vehicle 10. For example, the urgency of "medium" includes "sensor performance decrease" that is notification of a fact or expectation of decrease in the performance of a sensor of the vehicle 10. For example, the urgency of "high" includes "collision-unavoidable obstruction detected" that is notification of the presence of an obstruction with which the vehicle 10 will collide unavoidably.

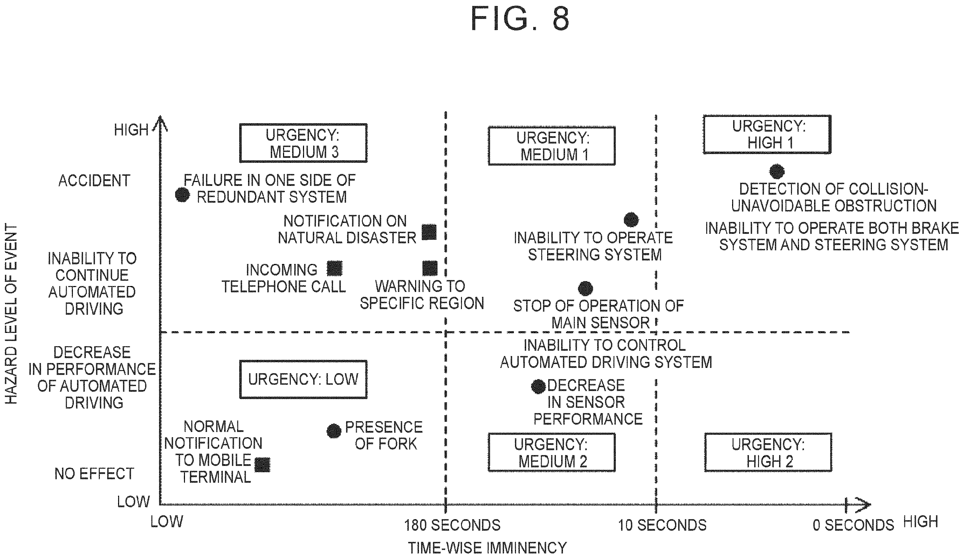

FIG. 8 illustrates an example of a case where the urgency is divided into six levels in association with FIG. 7. In FIG. 8, the urgency increases in the order of "low", "medium 3", "medium 2", "medium 1", "high 2", and "high 1". However, the levels of urgency are not limited to these levels in particular, and can be set as appropriate.

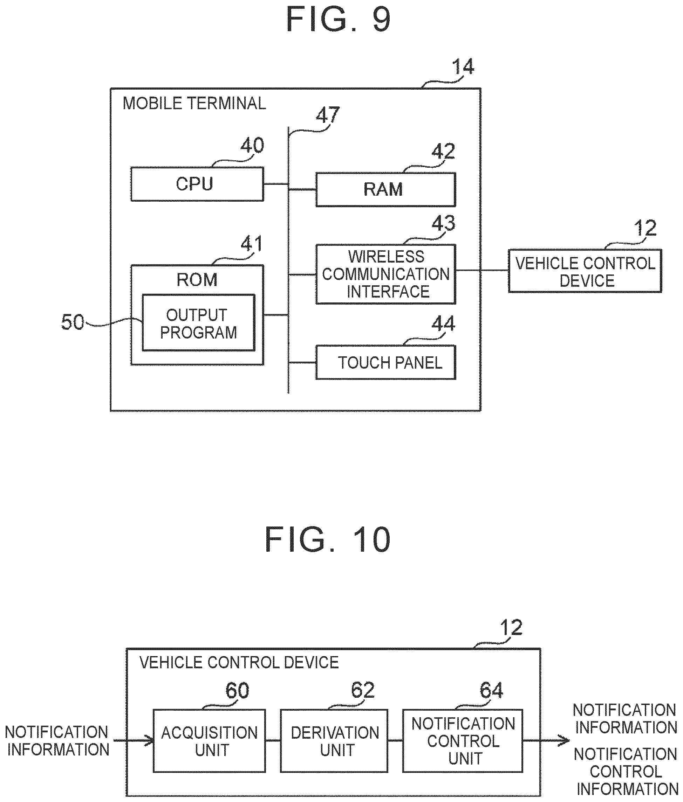

Next, the hardware configuration of the mobile terminal 14 according to the present embodiment will be described with reference to FIG. 9. The mobile terminal 14 includes a CPU 40, a ROM 41, a RAM 42, a wireless communication interface 43, and a touch panel 44. The CPU 40, the ROM 41, the RAM 42, the wireless communication interface 43, and the touch panel 44 are connected to each other via a bus 47 so as to communicate with each other.

The CPU 40 is a central processing unit that executes various programs and controls various parts. That is, the CPU 40 reads programs from the ROM 41 and executes the programs using the RAM 42 as a work area.

The ROM 41 serves as a storage unit, and stores various programs and various types of data. In the present embodiment, the ROM 41 stores an output program 50. The RAM 42 serves as a work area, and temporarily stores programs and data.

The wireless communication interface 43 is an interface for connecting to the vehicle control device 12 by wireless communication. The touch panel 44 includes a liquid crystal display serving as a display device, and a touch sensor serving as an input device.

Next, the functional configuration of the vehicle control device 12 according to the present embodiment will be described with reference to FIG. 10. As illustrated in FIG. 10, the vehicle control device 12 includes an acquisition unit 60, a derivation unit 62, and a notification control unit 64. The CPU 20 functions as the acquisition unit 60, the derivation unit 62, and the notification control unit 64 by executing programs stored in the ROM 21. The notification control unit 64 may be provided in the mobile terminal 14 or in the cloud server 16. The notification control unit 64 may be provided in a plurality of devices out of the vehicle control device 12, the mobile terminal 14, and the cloud server 16.

The acquisition unit 60 acquires notification information regarding the vehicle 10. For example, the acquisition unit 60 acquires various types of information as notification information, such as information from the external sensor 100, information from the in-cabin sensor 101, surrounding information from the automotive navigation system and the map data 102, and information that can be acquired via the communication unit 25 and the mobile terminal 14. Alternatively, notification information generated by another ECU such as the automated driving ECU 107 that has acquired this information is acquired via the in-vehicle communication interface 24.

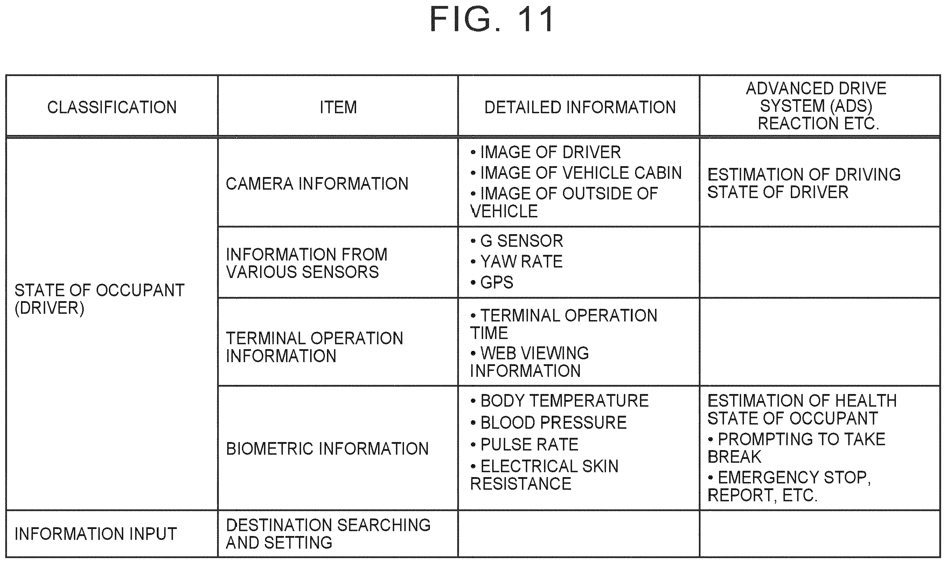

FIG. 11 illustrates an example of information provided from the mobile terminal 14 to the vehicle 10. As illustrated in FIG. 11, the information is classified into a state of the occupant (driver) and information input. An item regarding the state of the driver includes, for example, camera information indicating images of at least one of the driver, the vehicle cabin, and the outside of the vehicle, and biometric information such as a body temperature, a blood pressure, a pulse rate, and an electrical skin resistance of the driver. Based on the camera information provided from the mobile terminal 14, an advanced drive system (ADS) of the vehicle 10, specifically, the vehicle control device 12, can estimate the driving state of the driver, such as whether the authority for driving can be turned over to the driver. Based on the biometric information provided from the mobile terminal 14, the vehicle control device 12 estimates the health state of the driver, and can react by, for example, "prompting to take a break" or "bringing the vehicle 10 to an emergency stop". The vehicle control device 12 estimates the driving state and the health state of the driver using known processing as appropriate. Among these classifications of information, information input items include destination searching, destination setting, and so forth for the vehicle 10.

Returning to FIG. 10, the derivation unit 62 derives the time-wise imminency for the driver to respond while automated driving is being executed, based on the notification information acquired by the acquisition unit 60. For example, when the notification information includes a time limit such as "YY seconds remain until XX", the derivation unit 62 uses the time limit to derive the time-wise imminency. The derivation unit 62 according to the present embodiment derives one of "low", "medium", and "high" as the time-wise imminency based on the time limit and two threshold values TH1, TH2 (TH1 < TH2). The derivation unit 62 derives "high" as the time-wise imminency when the time limit is equal to or smaller than the threshold value TH1, derives "medium" as the time-wise imminency when the time limit is larger than the threshold value TH1 and equal to or smaller than the threshold value TH2, and derives "low" as the time-wise imminency when the time limit is larger than the threshold value TH2. For example, the threshold value TH1 is set to 10 seconds, and the threshold value TH2 is set to 60 seconds.

For example, when the notification information includes a distance such as "YY km to XX", the derivation unit 62 derives an expected arrival time by dividing the distance by a vehicle speed. In this case, the derivation unit 62 derives the time-wise imminency using the expected arrival time as in the case of the time limit described above. The derivation unit 62 may output the distance to an ECU that controls the automotive navigation system, and cause this ECU to derive the expected arrival time.

For example, when the notification information indicates that "5 seconds remain until exiting the operational design domain", "high" is derived as the time-wise imminency. For example, when the notification information indicates that "15 seconds remain until exiting the operational design domain", "medium" is derived as the time-wise imminency. For example, when the notification information indicates that "75 seconds remain until exiting the operational design domain", "low" is derived as the time-wise imminency. Entry of the vehicle 10 into a region outside the operational design domain means that the vehicle 10 switches from automated driving to manual driving.

The derivation unit 62 derives the hazard level of the event based on the notification information acquired by the acquisition unit 60. The hazard level of the event according to the present embodiment represents how difficult it will be to continue automated driving of the vehicle 10. For example, the derivation unit 62 extracts words by performing natural language processing on the notification information, and derives the hazard level of an event associated with these words. The derivation unit 62 may derive the hazard level of the event by inputting the notification information into a trained model that is obtained in advance by machine learning. This trained model is, for example, a neural network model that takes notification information as input and outputs the hazard level of an event. This trained model is obtained by machine learning using a set of notification information and correct answer data regarding the hazard level of the event as learning data.

For example, when the notification information is a notification of a change in weather that will cause decrease in the performance of automated driving, such as "the weather will change from cloudy to rainy", "low" is derived as the hazard level of the event. For example, when the notification information is a notification of a change in weather that will cause difficulty in continuing automated driving, such as "rain will rapidly become heavier", "medium" is derived as the hazard level of the event. For example, when the notification information is a notification of a roadway condition that will cause difficulty in continuing automated driving, such as "the road surface is frozen at the point out of the current tunnel", "high" is derived as the hazard level of the event.

When the notification information is a notification of a failure of the vehicle 10, the hazard level of the event is derived based on the severity of the failure.

In the present embodiment, the notification information with "low" urgency is, for example, information in which automated driving can continue even without the driver's action in response to the notification information, such as the vehicle 10 presenting the driver with information of overtaking a vehicle traveling ahead. In the present embodiment, the notification information with "medium" urgency is information to which the driver can respond while sitting in the driver's seat with a normal level of attention. In the present embodiment, the notification information with "high" urgency is information for which the driver has difficulty in taking action.

Examples of the notification information include information regarding the remaining charge of the battery of the vehicle 10, information regarding obstructions that are difficult to avoid, information regarding a failure in one side of a redundant system, and information regarding a decrease in sensor performance. Examples of the notification information also include information regarding roadway objects, information regarding natural disasters, such as earthquake early warnings, information regarding forks in the roadway, information regarding changes in the automated driving level, and information regarding the remaining amount of fuel in the vehicle 10.

The derivation unit 62 refers to the urgency data 32 and derives the urgency associated with the derived combination of the time-wise imminency and the hazard level of the event. The derivation unit 62 may derive the urgency by summing scored values of the time-wise imminency and the hazard level of the event, or by weighting either of them and then summing.

The notification control unit 64 performs, based on the urgency derived by the derivation unit 62, control to give a notification of notification information by varying the range of the mobile terminal 14 controllable by the driver until a predetermined condition is satisfied. The notification control unit 64 gives the notification of the notification information by performing at least one of displaying the notification information on the touch panel 44 of the mobile terminal 14, outputting sound from the mobile terminal 14, and vibrating the mobile terminal 14.

Regarding notification information with a certain level ("medium" in the present embodiment) or higher of the urgency derived by the derivation unit 62, the notification control unit 64 performs control to give a notification of the notification information in a state in which the mobile terminal 14 is controlled such that the driver cannot perform operation thereon until the driver performs a vehicle operation. Regarding the notification information with the certain level or higher of the urgency derived by the derivation unit 62, the notification control unit 64 performs control to give a notification of the notification information in a state in which the mobile terminal 14 is controlled such that a confirmation button is displayed on the touch panel 44 of the mobile terminal 14 and the driver cannot perform any operation on the mobile terminal 14 except for an operation to press the confirmation button until the driver presses the confirmation button.

Regarding the notification information with the urgency equal to or higher than the certain level, the notification control unit 64 increases the coverage rate of the notification information on the touch panel 44 of the mobile terminal 14 to be greater than the coverage rate of notification information with urgency lower than the certain level. Regarding the notification information with the urgency lower than the certain level, the notification control unit 64 performs control to give a notification of the notification information in a state in which the mobile terminal 14 is controlled such that the driver can operate the mobile terminal 14 without performing the vehicle operation. Regarding the notification information with the urgency lower than the certain level, the notification control unit 64 performs control to give the notification of the notification information in a state in which the mobile terminal 14 is controlled such that the confirmation button is not displayed on the touch panel 44 of the mobile terminal 14 and the driver can perform various operations on the mobile terminal 14.

That is, examples of the range of the mobile terminal 14 controllable by the driver until the condition that the driver performs the vehicle operation or the condition that the driver presses the confirmation button is satisfied include the operable range of the mobile terminal 14 and the coverage rate of the notification information on the touch panel 44 of the mobile terminal 14.

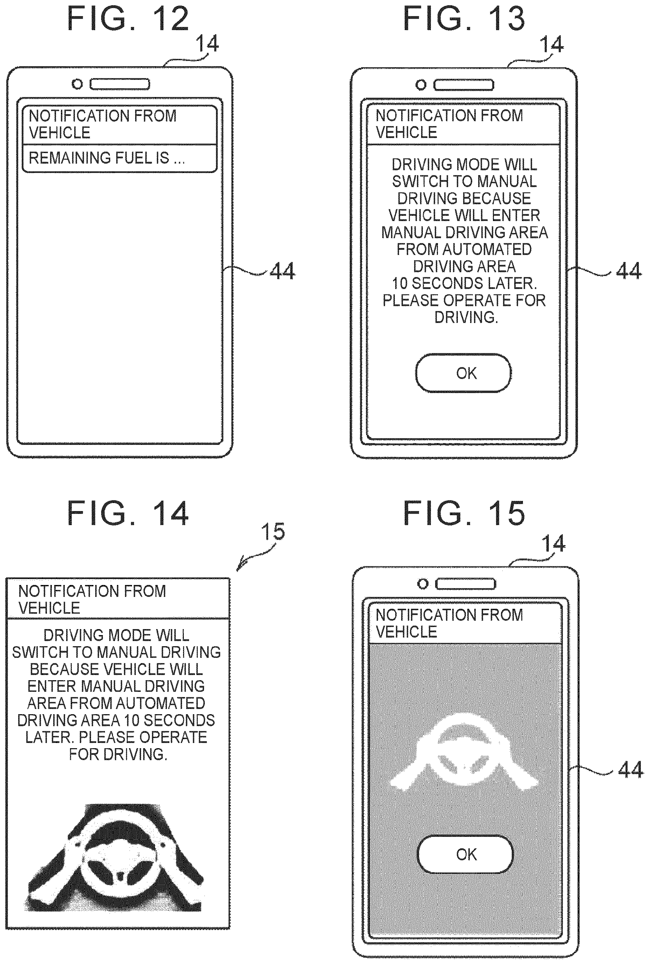

Specifically, as illustrated in FIG. 12 as an example, the notification control unit 64 performs control to notify the mobile terminal 14 of the notification information with "low" urgency in a state in which the notification information is displayed on part of the touch panel 44 of the mobile terminal 14 and operations other than confirming the notification information on the mobile terminal 14 can be performed even before the driver confirms the notification information. Although FIG. 12 illustrates an example in which the notification information is displayed on the top of the touch panel 44 of the mobile terminal 14, the disclosed technology is not limited to this form. For example, the notification information may be displayed at the middle or the bottom of the touch panel 44 of the mobile terminal 14.

As illustrated in FIG. 13 as an example, the notification control unit 64 performs control to notify the mobile terminal 14 of the notification information with "medium" or "high" urgency in a state in which the mobile terminal 14 is controlled such that the notification information is displayed on the entire touch panel 44 of the mobile terminal 14 and the driver cannot perform any operation except for an operation to press the confirmation button until the driver presses the confirmation button. FIG. 13 illustrates an example in which operations other than pressing the confirmation button cannot be performed on the mobile terminal 14 until the driver confirms the notification information by pressing the confirmation button.

The notification control unit 64 may perform control to notify the display device 15 of the notification information. As illustrated in FIG. 14 as an example, the notification control unit 64 may perform control to display an image indicating a notification content on the display device 15, in addition to a text string indicating the notification content. The notification control unit 64 may count down the remaining time on a notification screen as time passes. The display area of the touch panel 44 of the mobile terminal 14 is often smaller than the display area of the display device 15. Therefore, the notification control unit 64 may reduce the notification amount on the touch panel 44 of the mobile terminal 14, as compared to the notification amount on the display device 15. In this case, as illustrated in FIG. 15 as an example, the notification control unit 64 may perform control to notify the mobile terminal 14 of an icon indicating the notification content instead of the notification of the text string indicating the notification content. In this case, the notification control unit 64 may change the background color of the notification screen depending on the urgency. For example, the notification control unit 64 may set the background color to yellow when the urgency is "medium" and may set the background color to red when the urgency is "high".

The notification control unit 64 may perform control to give the notification of the notification information such that the notification amount increases as the urgency increases. Examples of the notification amount include the number of devices that output the notification information, the volume of sound for the notification of the notification information, the duration of sound for the notification of the notification information, the amount of vibration for the notification, and the duration of vibration for the notification.

For example, when the urgency is "medium" or higher, the notification control unit 64 may perform control to give the notification of the notification information such that the notification amount increases as the urgency increases. Specifically, when the urgency is "medium", the notification control unit 64 performs control to display the notification information on the entire touch panel 44 of the mobile terminal 14. When the urgency is "high", the notification control unit 64 performs control to display the notification information on the entire touch panel 44 of the mobile terminal 14 and output the notification information as audio from a speaker of the mobile terminal 14.

The operation on the mobile terminal 14 and the notification to the mobile terminal 14 may be performed on the screen of a particular application installed on the mobile terminal 14 by the user. When automated driving of Level 3 or higher is started, the notification control unit 64 may disregard notification impermissible settings in the application that are made in the mobile terminal 14, and control the mobile terminal 14 to enable notification. Alternatively, the mobile terminal 14 may be controlled such that notifications of the application cannot be made impermissible.

The application may include in advance screen data to be displayed on the touch panel 44 depending on various situations, and the data may be downloaded to the mobile terminal 14 in advance. Thus, the amount of communication on the mobile terminal 14 can be reduced, and time lag when giving a notification to the mobile terminal 14 can also be reduced.

Even when notifications are permitted on the mobile terminal 14, the mobile terminal 14 may be in a silent mode (i.e., no notification sound is output when a notification is given to the mobile terminal 14). When the urgency is high or is medium or higher in such a case, the notification control unit 64 may control the mobile terminal 14 to emit a notification sound regardless of whether the silent mode is set on the mobile terminal 14.

The notification control unit 64 performs control such that the mobile terminal 14 carried by the driver is notified of the notification information with different notification ending conditions depending on the urgency. For example, the notification control unit 64 performs control to give the notification of the notification information with urgency lower than the certain level as many times as set in advance, such as once or twice. The notification control unit 64 performs control to repeatedly give the notification of the notification information with urgency equal to or higher than the certain level until the driver performs a vehicle operation such as an operation of gripping the steering wheel with his/her hand. The notification control unit 64 performs control to repeatedly give the notification of the notification information with urgency equal to or higher than the certain level until the driver presses the confirmation button displayed on the touch panel 44 of the mobile terminal 14. That is, the notification ending conditions according to the present embodiment include the number of times of notification, the condition that the driver performs the vehicle operation, and the condition that the driver presses the confirmation button displayed on the touch panel 44 of the mobile terminal 14.

The notification control unit 64 generates notification control information including the range of the mobile terminal 14 controllable by the driver, the method for outputting notification information on the mobile terminal 14, such as display, sound, or vibration, and the ending conditions. The notification control unit 64 performs control to give the notification of the notification information by transmitting the notification information and the notification control information to the mobile terminal 14 via the wireless communication interface 23.

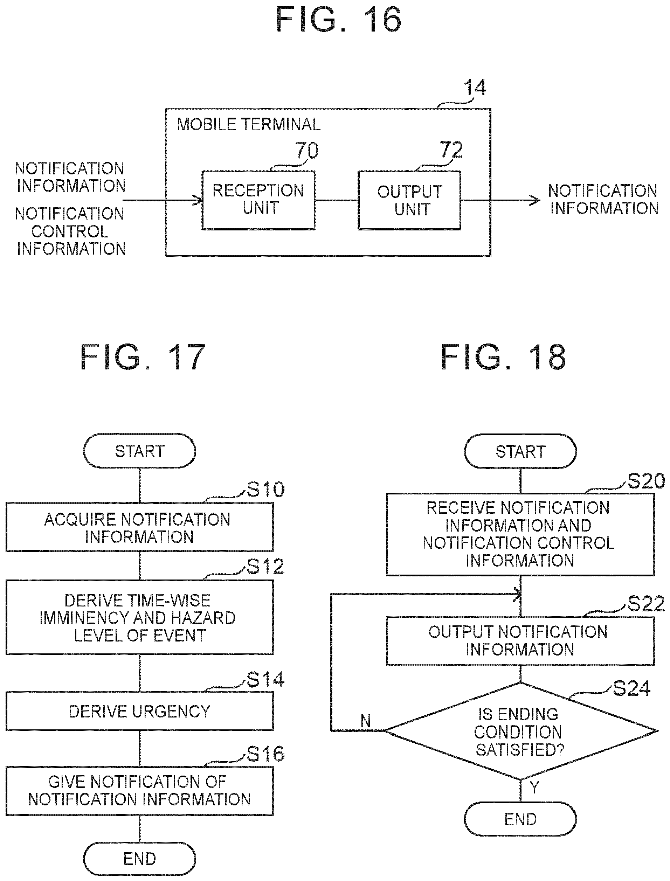

Next, the functional configuration of the mobile terminal 14 according to the present embodiment will be described with reference to FIG. 16. As illustrated in FIG. 16, the mobile terminal 14 includes a reception unit 70 and an output unit 72. The CPU 40 functions as the reception unit 70 and the output unit 72 by executing programs stored in the ROM 41.

The reception unit 70 receives the notification information and the notification control information transmitted from the vehicle control device 12 via the wireless communication interface 43.

The output unit 72 notifies the driver of the notification information by outputting the notification information based on the notification control information received by the reception unit 70. That is, the driver continues to be notified until the ending condition included in the notification control information is satisfied.

Next, operations of the vehicle control device 12 according to the present embodiment will be described with reference to FIG. 17. Notification control processing illustrated in FIG. 17 is executed by the CPU 20 executing programs stored in the ROM 21. The notification control processing illustrated in FIG. 17 is executed, for example, when notification information is input to the vehicle control device 12 from another ECU via the in-vehicle communication interface 24 during execution of automated driving.

In step S10 of FIG. 17, the acquisition unit 60 acquires the notification information via the in-vehicle communication interface 24. In step S12, the derivation unit 62 derives the time-wise imminency for the driver to respond during execution of automated driving based on the notification information acquired in step S10 as described above. As described above, the derivation unit 62 derives the hazard level of the event based on the notification information acquired in step S10.

In step S14, the derivation unit 62 refers to the urgency data 32 and derives urgency associated with a combination of the time-wise imminency and the hazard level of the event derived in step S12. In step S16, as described above, control is performed to give a notification of the notification information by transmitting the notification information and the notification control information to the mobile terminal 14 via the wireless communication interface 23 based on the urgency derived in step S14. Thus, the notification control unit 64 performs control to give the notification of the notification information while varying the range of the mobile terminal 14 controllable by the driver until a predetermined condition is satisfied based on the urgency derived by the derivation unit 62. Accordingly, the notification control unit 64 performs control such that the notification of the notification information is given to the mobile terminal 14 carried by the driver with different notification ending conditions depending on the urgency. When the processing of step S16 ends, the notification control processing ends. For example, when a notification of notification information with "high" urgency is given in step S16, the automated driving ECU 107 or the like performs the MRM, and the state of the vehicle 10 transitions to the MRC.

Next, operations of the mobile terminal 14 according to the present embodiment will be described with reference to FIG. 18. Notification processing illustrated in FIG. 18 is executed by the CPU 40 executing programs stored in the ROM 41. The notification processing illustrated in FIG. 18 is executed, for example, when the notification information and the notification control information are transmitted from the vehicle control device 12 to the mobile terminal 14 in step S16.

In step S20 of FIG. 18, the reception unit 70 receives the notification information and the notification control information transmitted from the vehicle control device 12 via the wireless communication interface 43. In step S22, the output unit 72 outputs the notification information based on the notification control information received in step S20 as described above. In step S24, the output unit 72 determines whether the ending condition included in the notification control information received in step S20 is satisfied. When the determination result is negative, the processing returns to step S22. When the determination result is affirmative, the notification processing ends.

As described above, according to the present embodiment, it is possible to reduce the occurrence of the case where the driver of the vehicle 10 overlooks important notifications relating to the vehicle 10.

### Second Embodiment

Next, a notification system 1 according to a second embodiment will be described, with the description of portions that are redundant with the first embodiment being omitted or simplified.

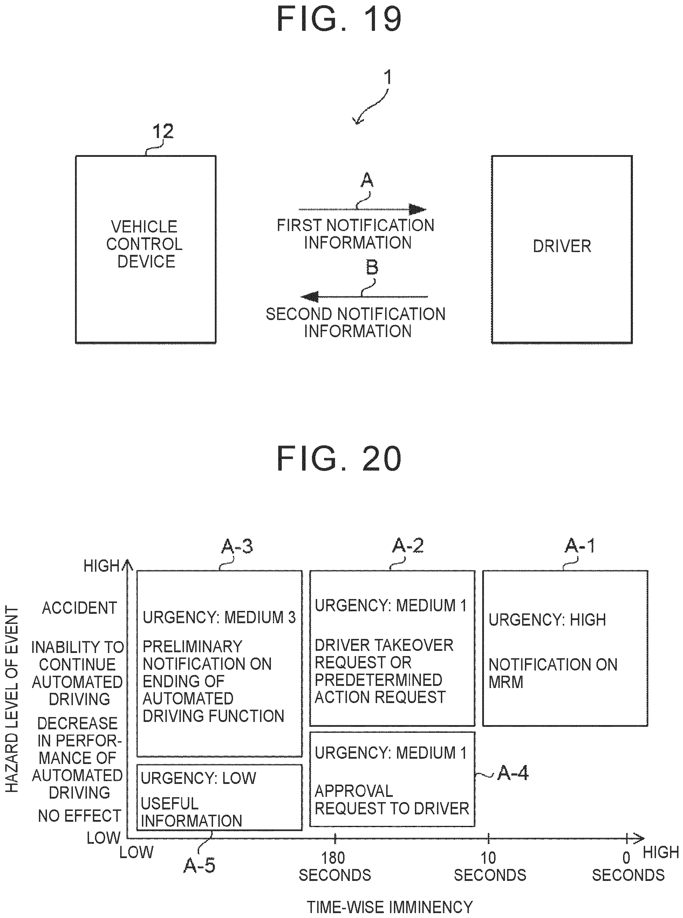

FIG. 19 is a diagram illustrating an example of directionality of notification information exchanged in the notification system 1.
An arrow A illustrated in FIG. 19 indicates notification information given from the vehicle control device 12 toward the driver of the vehicle 10. The notification information from the vehicle control device 12 toward the driver is the notification information described in the first embodiment. In the second embodiment, the notification information from the vehicle control device 12 toward the driver will be referred to as "first notification information".

An arrow B illustrated in FIG. 19 indicates notification information given from the driver toward the vehicle control device 12. In the second embodiment, the notification information from the driver toward the vehicle control device 12 will be referred to as "second notification information". For example, the second notification information includes the biometric information of the driver acquired via the mobile terminal 14, the in-cabin sensor 101, and so forth. The biometric information is information on the driver, such as a body temperature, a blood pressure, a pulse rate, an electrical skin resistance, a respiratory rate, and a behavior of the driver. The second notification information also includes operation information indicating details of operations performed by the driver on the mobile terminal 14, the input device 106, and so forth. The second notification information further includes driver information indicating the state of the driver, such as whether the authority for driving can be turned over to the driver. For example, the vehicle control device 12 may acquire details of utterances of the driver collected by a microphone included in the in-cabin sensor 101 as the second notification information, or may acquire the operation information and the driver information transmitted from the mobile terminal 14 as the second notification information. Thus, the vehicle control device 12 can grasp the state of the driver based on the acquired second notification information. The vehicle control device 12 changes the urgency by setting at least one of the time-wise imminency and the hazard level of the event based on the grasped state of the driver. Examples of the state of the driver grasped by the vehicle control device 12 and the change in the urgency will be described later.

FIG. 20 is a diagram illustrating a first example of stratification of urgency. The urgency in the second embodiment is the urgency of the response by the driver or the vehicle control device 12 during execution of automated driving. As in the first embodiment, the urgency increases as the time-wise imminency increases and as the hazard level of an event increases. FIG. 20 illustrates stratification of the urgency of the response by the driver during execution of automated driving.

The stratification level of urgency in area A-1 illustrated in FIG. 20 is "high". In area A-1, both the time-wise imminency and the hazard level of the event are high. In area A-1, the first notification information to be given to the driver is a notification regarding an MRM indicating, for example, that the MRM will be executed or is being executed. The driver is notified of the first notification information when the vehicle control device 12 suddenly no longer satisfies traveling environment conditions that are a prerequisite for controlling automated driving or an important system such as the actuator system 108 for controlling automated driving has malfunctioned. Although the urgency of the response by the driver in area A-1 is high, there is not sufficient time for the driver to respond to the driver takeover request for turning over the primary entity that performs driving from the vehicle control device 12 to the driver, and accordingly the vehicle control device 12 does not request any response from the driver. In this case, for example, the vehicle control device 12 executes the MRM and attempts to park the vehicle 10 on a roadside, generates a notification regarding the MRM indicating that the MRM is being executed, and transmits the notification to the mobile terminal 14 as the first notification information. Thus, the driver can grasp that the MRM is being executed.

The stratification level of urgency in area A-2 illustrated in FIG. 20 is "medium 1". In area A-2, the first notification information to be given to the driver is a driver takeover request or a predetermined action request. The driver is notified of the first notification information when manual driving of the vehicle 10 that no longer satisfies the traveling environment conditions can be performed. The above description "no longer satisfies the traveling environment conditions" means, for example, a case where the vehicle 10 has entered a region outside the operational design domain or a failure of predetermined in-vehicle equipment is detected. The above description "when manual driving of the vehicle 10 ... can be performed" means a case where there is no abnormality in the in-vehicle equipment necessary for manual driving regardless of whether the driver is able to respond to the driver takeover request. In this case, the vehicle control device 12 generates, for example, the driver takeover request as the first notification information and transmits it to the mobile terminal 14. Thus, the driver who can respond to the driver takeover request can grasp that it is necessary to switch the vehicle 10 to manual driving.

As described above, the description "no longer satisfies the traveling environment conditions" includes a case where a failure of predetermined in-vehicle equipment is detected. The failure of the predetermined in-vehicle equipment includes a failure of the in-vehicle equipment in which a predetermined system function of the vehicle 10 becomes disabled. For example, when the in-vehicle equipment in which a failure has been detected is the driver monitoring camera included in the in-cabin sensor 101, the vehicle control device 12 may be unable to grasp whether the driver can respond to the driver takeover request transmitted to the mobile terminal 14.

In area A-2, the vehicle control device 12 may generate the predetermined action request as the first notification information instead of the driver takeover request and transmit it to the mobile terminal 14. The predetermined action request is, for example, a request for the driver to perform a predetermined action such as gripping the steering wheel with his/her hand or looking up.

The stratification level of urgency in area A-3 illustrated in FIG. 20 is "medium 3". "Medium 3" is lower in urgency than "medium 1". The time-wise imminency is low in area A-3. In area A-3, the first notification information to be given to the driver is a preliminary notification regarding the ending of the automated driving function. The automated driving function is a function of the vehicle 10 for performing automated driving at Automated Driving Level 3 or higher with the vehicle control device 12 serving as the primary entity that performs driving. The driver is notified of the first notification information when the ending of the automated driving function is detected to occur after an elapse of a certain period of time (e.g., several minutes). In most cases, the driver is notified of the first notification information when the vehicle 10 approaches the outside of the operational design domain that is set in advance. In this situation, there is sufficient time before the primary entity of driving is turned over to the driver. For example, the vehicle control device 12 generates, as the first notification information, a preliminary notification indicating that the automated driving function will end after an elapse of the certain period of time, and transmits it to the mobile terminal 14. Thus, the driver can grasp that the automated driving function will end after an elapse of the certain period of time.

The stratification level of urgency in area A-4 illustrated in FIG. 20 is "medium 1". In area A-4, the first notification information to be given to the driver is an approval request to the driver. The driver is notified of the first notification information at a preset notification timing for the automated driving function. In this case, the vehicle control device 12 requests the driver to approve the execution of a predetermined automated driving function before starting to execute the automated driving function. For example, the vehicle control device 12 generates an approval request for execution of the predetermined automated driving function as the first notification information and transmits it to the mobile terminal 14. Thus, the driver can grasp the automated driving function scheduled to be executed, and can approve the execution of the automated driving function as necessary.

The predetermined automated driving function may be part of the automated driving function input in advance by the driver depending on at least one of preferences and characteristics of the driver. In the situation of area A-4, the vehicle control device 12 may execute the predetermined automated driving function without obtaining approval of the driver, generate a notification indicating that the automated driving function is being executed as the first notification information, and transmit it to the mobile terminal 14.

The stratification level of urgency in area A-5 illustrated in FIG. 20 is "low". In area A-5, both the time-wise imminency and the hazard level of the event are low. In area A-5, the first notification information to be given to the driver is non-urgent but useful information for the driver, such as the remaining fuel or charge level or information regarding relatively distant routing determination. The driver is notified of the first notification information when useful information is acquired. In this case, the vehicle control device 12 generates, for example, useful information indicating the remaining fuel level as the first notification information and transmits it to the mobile terminal 14. Thus, the driver can grasp the remaining fuel level.

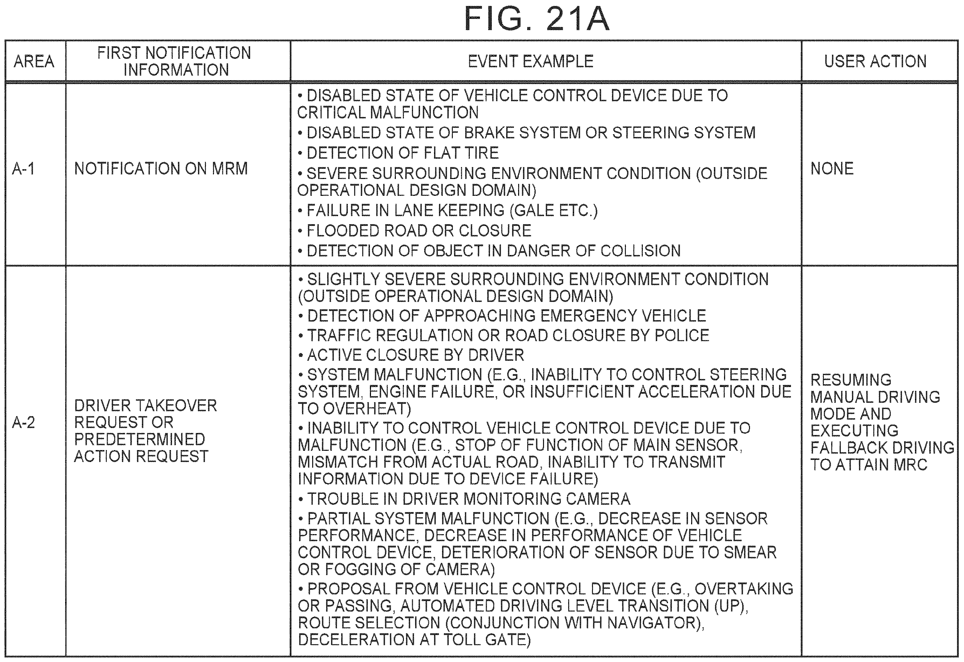

FIGS. 21A-21B illustrate examples of the first notification information associated with areas A-1 to A-5 in FIG. 20, events for which a notification of the first notification information is given, and actions of the user, specifically, the driver, that are required in response to the given notification of the first notification information.

As illustrated in FIG. 21A, an example of an event for which the notification of the first notification information associated with area A-1 is given is "disabled state of brake system or steering system". For example, assumption will be made that the vehicle control device 12 detects that the brake system 111 included in the actuator system 108 connected to the automated driving ECU 107 has become disabled. In this case, the vehicle control device 12 transmits a notification regarding the MRM to the mobile terminal 14 as the first notification information. The action of the driver required for this first notification information is "none". That is, the driver does not need to take any action when the notification of this first notification information is given.

As illustrated in FIG. 21A, an example of an event for which the notification of the first notification information associated with area A-2 is given is "detection of approaching emergency vehicle". For example, assumption will be made that the vehicle control device 12 detects that an emergency vehicle is approaching the vehicle 10 based on information from the external sensor 100. In this case, the vehicle control device 12 transmits a driver takeover request or a predetermined action request as the first notification information to the mobile terminal 14. The action of the driver required for this first notification information is, for example, switching from automated driving to manual driving and resuming the manual driving mode by performing a predetermined operation on the input device 106. In this case, the driver may execute fallback driving such as stopping the vehicle 10 on a roadside in the resumed manual driving mode to attain the MRC.

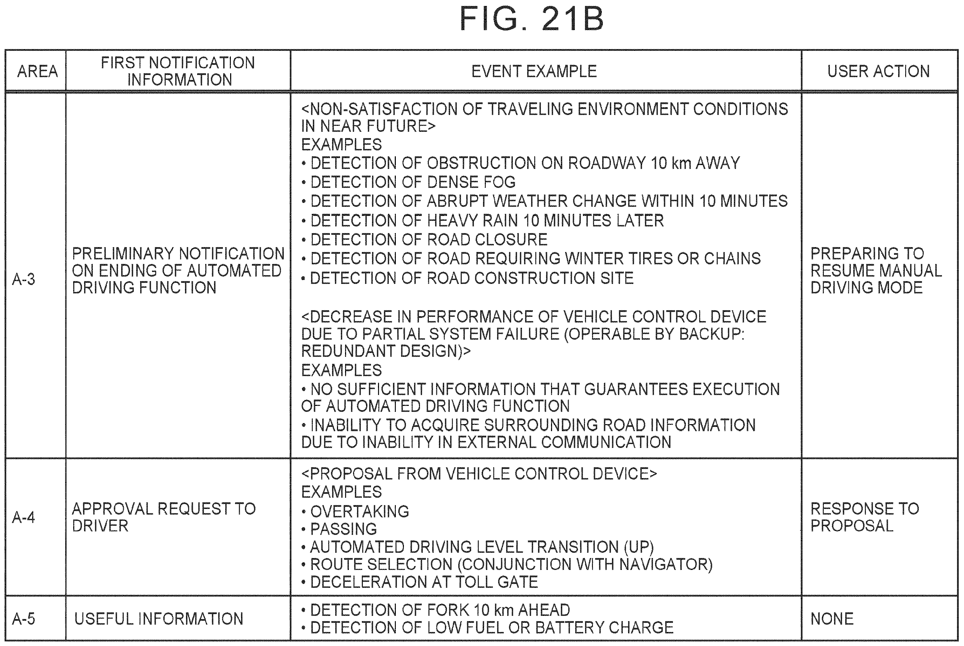

As illustrated in FIG. 21B, an example of an event for which the notification of the first notification information associated with area A-3 is given is "non-satisfaction of traveling environment conditions in the near future", such as detection of an obstruction on a roadway 10 km away or an abrupt weather change within 10 minutes. For example, assumption will be made that the vehicle control device 12 detects that the weather will change abruptly within 10 minutes based on information from the cloud server 16. In this case, the vehicle control device 12 transmits a preliminary notification regarding the ending of the automated driving function to the mobile terminal 14 as the first notification information. The action of the driver required for this first notification information is, for example, preparing to resume the manual driving mode by gripping the steering wheel with his/her hand.

As illustrated in FIG. 21B, an example of an event for which the notification of the first notification information associated with area A-4 is given is "proposal from the vehicle control device 12", such as overtaking or passing. For example, the vehicle control device 12 proposes, to the driver, overtaking a preceding vehicle as the predetermined automated driving function. In this case, the vehicle control device 12 transmits an approval request for requesting the driver to approve the execution of the automated driving function regarding overtaking a preceding vehicle to the mobile terminal 14 as the first notification information before starting to execute overtaking of the preceding vehicle. The action of the driver required for this first notification information is a response to the proposal from the vehicle control device 12, such as a predetermined operation on the mobile terminal 14.

As illustrated in FIG. 21B, an example of an event for which the notification of the first notification information associated with area A-5 is given is "detection of fork 10 km ahead". For example, assumption will be made that the vehicle control device 12 detects that there is a fork 10 km ahead based on surrounding information from the automotive navigation system, the map data 102, and so forth. In this case, the vehicle control device 12 transmits useful information to the mobile terminal 14 as the first notification information. The action of the driver required for this first notification information is "none". That is, the driver does not need to take any action when the notification of this first notification information is given.

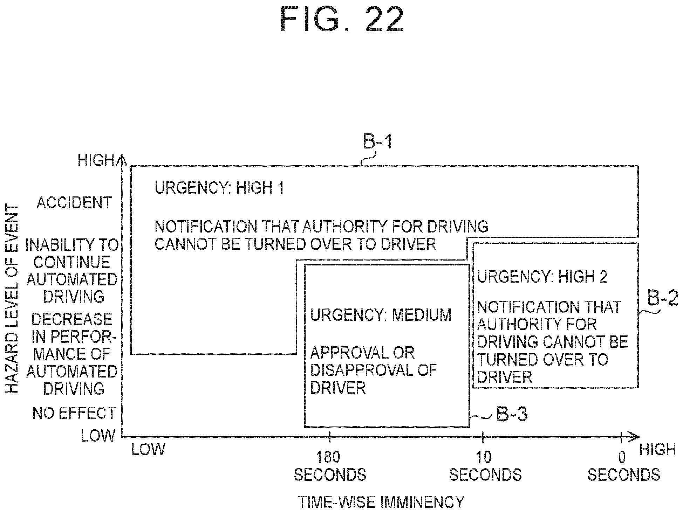

FIG. 22 is a diagram illustrating a second example of stratification of urgency. FIG. 22 illustrates stratification of the urgency of the response by the vehicle control device 12 during execution of automated driving.

The stratification level of urgency in area B-1 illustrated in FIG. 22 is "high 1". The vehicle control device 12 is notified of the second notification information in area B-1 indicating that the authority for driving cannot be turned over to the driver. In other words, the vehicle control device 12 is notified of the second notification information indicating that the driver is unable to perform dynamic tasks of "recognition, judgment, and operation" to be performed by the driver during driving (dynamic driving tasks). The vehicle control device 12 is notified of the second notification information when the driver who is suffering an acute disorder, impairment of consciousness, or the like performs a predetermined operation on the mobile terminal 14, the input device 106, or the like. The time-wise imminency and the hazard level of the event in area B-1 change depending on the reason why the authority for driving cannot be turned over to the driver, specifically, the state of the driver. For example, when the vehicle control device 12 grasps that the state of the driver is an acute disorder such as a heart attack or a stroke, the vehicle control device 12 sets both the time-wise imminency and the hazard level of the event to "high". When the vehicle control device 12 grasps that the state of the driver is lethargy, fatigue, gastrointestinal attack, or the like, the vehicle control device 12 sets the hazard level of the event to "high". In the case above, the vehicle control device 12 sets the urgency to be higher in the case where the state of the driver is an acute disorder than in the case where the state of the driver is lethargy, fatigue, gastrointestinal attack, or the like. The method for the vehicle control device 12 to grasp the state of the driver will be described later.

The stratification level of urgency in area B-2 illustrated in FIG. 22 is "high 2". "High 2" is lower in urgency than "high 1". The vehicle control device 12 is notified of the second notification information in area B-2 indicating that the authority for driving cannot be turned over to the driver. The vehicle control device 12 is notified of the second notification information when the mobile terminal 14 presumes that the authority for driving cannot be turned over to the driver. For example, the mobile terminal 14 presumes whether the authority for driving cannot be turned over to the driver based on the biometric information of the driver, the operation information, and so forth. After presuming that the authority for driving cannot be turned over to the driver, the mobile terminal 14 periodically presumes whether the authority for driving can be turned over to the driver based on the biometric information of the driver, the operation information, and so forth. When the mobile terminal 14 presumes that the authority for driving can be turned over to the driver, the mobile terminal 14 notifies the vehicle control device 12 of the second notification information indicating that the authority for driving can be turned over to the driver.

The stratification level of urgency in area B-3 illustrated in FIG. 22 is "medium". In area B-3, the second notification information to be given to the vehicle control device 12 is approval or disapproval of the driver in response to the approval request from the vehicle control device 12. The vehicle control device 12 is notified of the second notification information when the driver performs a predetermined response operation in response to the approval request on the mobile terminal 14, the input device 106, or the like. For example, the mobile terminal 14 notifies the vehicle control device 12 of operation information indicating the approval or disapproval of the driver in response to the approval request as the second notification information. This is not restrictive, and the vehicle control device 12 may acquire, as the second notification information, details of utterances of the driver indicating the approval or disapproval in response to the approval request and collected by the microphone included in the in-cabin sensor 101.

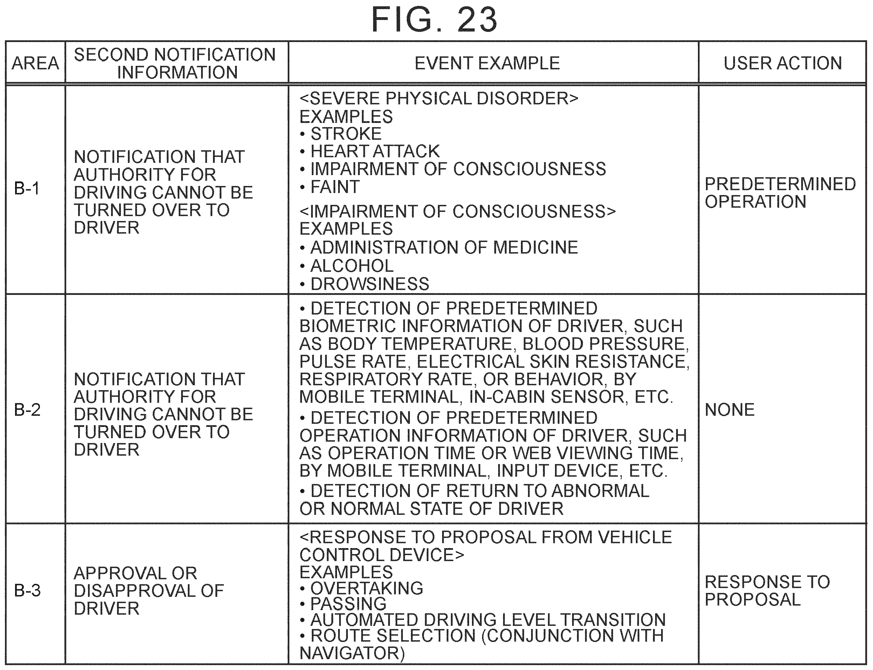

FIG. 23 illustrates examples of the second notification information associated with areas B-1 to B-3 in FIG. 22, events for which a notification of the second notification information is given, and actions of the user, specifically, the driver, at the time of giving the notification of the second notification information.

As illustrated in FIG. 23, an example of an event for which the notification of the second notification information associated with area B-1 is given is that the driver is suffering a "severe physical disorder" such as a stroke or a heart attack. For example, when the driver experiences symptoms of a stroke, such as paralysis or numbness of the limbs, the driver performs a predetermined operation on an emergency switch (not illustrated) included in the input device 106. The emergency switch is a switch that, when the predetermined operation is performed, notifies the vehicle control device 12 that the authority for driving cannot be turned over to the driver as the second notification information. Thus, the vehicle control device 12 can grasp that the authority for driving cannot be turned over to the driver.

When the vehicle control device 12 acquires the second notification information from the emergency switch, the vehicle control device 12 grasps the state of the driver based on the following information. First, the vehicle control device 12 acquires biometric information of the driver via the mobile terminal 14, the in-cabin sensor 101, or the like, and acquires operation information indicating details of operations performed by the driver via the mobile terminal 14, the input device 106, or the like. When the biometric information and the operation information of the driver are input, the vehicle control device 12 inputs the acquired biometric information and the acquired operation information of the driver into a trained model that has been trained to output the state of the driver. The vehicle control device 12 acquires the state of the driver that is output from the trained model, and grasps the state of the driver. The trained model is stored in, for example, the ROM 21.

The trained model is generated using a known machine learning algorithm such as a neural network. The training data input to the machine learning algorithm can be created by manually associating combinations of biometric information and operation information corresponding to various states of the driver, such as a stroke or a heart attack.

As illustrated in FIG. 23, an example of an event for which the notification of the second notification information associated with area B-2 is given is "detection of predetermined biometric information of the driver, such as a body temperature, a blood pressure, a pulse rate, an electrical skin resistance, a respiratory rate, or a behavior, by the mobile terminal 14, the in-cabin sensor 101, and so forth". For example, assumption will be made that the mobile terminal 14 detects that the pulse rate of the driver per minute is 100 or more or less than 50. In this case, the mobile terminal 14 notifies the vehicle control device 12 of the second notification information indicating that the authority for driving cannot be turned over to the driver. The action of the driver at the time of giving the notification of this second notification information is "none". That is, the driver does not need to take any action to notify the vehicle control device 12 of the second notification information.

As illustrated in FIG. 23, an example of an event for which the notification of the second notification information associated with area B-3 is given is "response to proposal from the vehicle control device 12", such as overtaking or passing. For example, assumption will be made that the mobile terminal 14 acquires first notification information indicating an approval request for execution of the automated driving function regarding overtaking a preceding vehicle. In this case, the driver performs a predetermined response operation indicating approval or disapproval in response to the approval request. The mobile terminal 14 notifies the vehicle control device 12 of operation information indicating the approval or disapproval of the driver as the second notification information. Thus, the vehicle control device 12 can grasp details of the response to the approval request regarding driving.

In the embodiments described above, when the notification information has urgency equal to or higher than the certain level, the notification control unit 64 may perform control to give a notification of the notification information so that a notification sound exclusively for notification from the vehicle 10 is output from the mobile terminal 14. In this case, the driver can easily grasp that the notification is an important notification from the vehicle 10.

In the embodiments described above, when the notification information has urgency equal to or higher than the certain level, the notification control unit 64 may perform control to call out the name of the driver by speech and then give the notification of the notification information. In this case, the name of the driver can be acquired by acquiring the registered name of the person in the mobile terminal 14 or by prompting the driver to input the name in advance.

In the embodiments described above, the notification control unit 64 may give the notification on the mobile terminal 14 based on the order of priority of the first notification information generated at the mobile terminal 14 and the second notification information regarding the vehicle 10 (arbitration of notification information). For example, the notification control unit 64 may increase the priority level in descending order of notification information with urgency equal to or higher than the certain level, notifications regarding incoming telephone calls to the mobile terminal 14 and regarding natural disasters such as earthquake early warnings, notifications of warnings to specific regions, notifications with urgency lower than the certain level, and normal notifications to the mobile terminal 14 other than those described above. More specifically, notification information with medium urgency or higher or with high urgency is related to the safety of the occupants. Therefore, the priority level may be set higher than those of notifications regarding incoming telephone calls to the mobile terminal 14 and regarding natural disasters such as earthquake early warnings and notifications of warnings to specific regions.

In the embodiments described above, when the notification information has urgency lower than the certain level, the notification control unit 64 may perform control to give the notification of the notification information in different notification forms depending on the state of the driver and the state of operation on the mobile terminal 14 by the driver. When the driver is viewing the touch panel 44 of the mobile terminal 14 as in a case where the driver is playing a game using the mobile terminal 14, the notification control unit 64 may perform control to give the notification of the notification information by controlling the touch panel 44 of the mobile terminal 14 to display the notification information. When the driver is listening to sound output from the mobile terminal 14 as in a case where the driver is playing music using the mobile terminal 14, the notification control unit 64 may perform control to give the notification of the notification information by controlling the speaker of the mobile terminal 14 to output audio of the notification information. When the driver is not using the mobile terminal 14 as in a case where the driver is sleeping, the notification control unit 64 may perform control to give the notification of the notification information, for example, by vibrating the mobile terminal 14 or the seatbelt of the driver's seat. The notification control unit 64 can distinguish the state of the driver and the state of operation on the mobile terminal 14 by the driver by acquiring information from the mobile terminal 14, analyzing an image captured by a camera that captures an image of the driver, such as the driver monitoring camera, or using a device that is worn by the driver and acquires the biometric information of the driver, such as a smart watch.

In the embodiments described above, the notification control unit 64 may give the notification of the notification information to a notification device installed in the vehicle 10 at the same timing as that of the notification to the mobile terminal 14. Examples of the notification device in this case include the display device 15, the speaker installed in the vehicle 10, and the seatbelt of the driver's seat. That is, the notification control unit 64 may give the notification of the notification information, for example, by display on the display device 15, audio output from the in-vehicle speaker, or vibration of the seat belt of the driver's seat at the same timing as that of the notification to the mobile terminal 14. In this case, the notification control unit 64 may end the notification from the notification device installed in the vehicle 10 when the notification ending condition is satisfied.

In the embodiments described above, when the driver has a plurality of mobile terminals 14, the notification control unit 64 may perform control to give the notification of the notification information to two or more of the mobile terminals 14.

In the embodiments described above, the mobile terminal 14 may include at least part of the functional units included in the vehicle control device 12.

The processing that is performed by the CPU reading software (programs) in the above embodiments may be performed by various processors other than the CPU. Examples of the processors in this case include programmable logic devices (PLDs) in which the circuit configuration can be changed after manufacturing, such as field-programmable gate arrays (FPGAs), and dedicated electric circuits that are processors having a circuit configuration specially designed to perform specific processing, such as application-specific integrated circuits (ASICs). Each type of processing may be performed by one of the various processors or by a combination of two or more processors of the same type or different types (e.g., a combination of a plurality of FPGAs or a combination of a CPU and an FPGA). The hardware structures of the various processors are, more specifically, electric circuits that are combinations of circuit elements such as semiconductor elements.

In the embodiments described above, various types of data are stored in the ROM or storage, but this is not restrictive. The storage unit may be a recording medium such as a compact disk (CD), a digital versatile disk (DVD), or a universal serial bus (USB) memory. In this case, various programs, data, and so forth will be stored in such recording media.

The notification system 1 according to the embodiments has been described above, but may be implemented in various forms without departing from the spirit of the present disclosure.

## Claims

1. A notification system (1) comprising:
a mobile terminal (14) configured to receive notification information for a driver of a vehicle (10) and notify the driver of the notification information; and
a processor (20) configured to:
generate the notification information;
transmit the notification information to the mobile terminal (14); and
cause the mobile terminal (14) to notify the driver of the notification information until an ending condition for ending notification is satisfied, wherein
the processor (20) is configured to change the ending condition depending on urgency of the notification information.

2. The notification system (1) according to claim 1, wherein the processor (20) is configured to determine the urgency based on whether the notification information requires a response from the driver.

3. The notification system (1) according to claim 1 or 2, wherein the processor (20) is configured to determine the urgency based on a hazard level of an event.

4. The notification system (1) according to claim 1 or 2, wherein when the urgency is equal to or higher than a certain level, the ending condition includes a vehicle operation performed by the driver.

5. The notification system (1) according to claim 1 or 2, wherein when the urgency is equal to or higher than a certain level, the ending condition includes depression of a confirmation button displayed on a display device of the mobile terminal (14) by the driver.

6. The notification system (1) according to claim 1 or 2, wherein the processor (20) is configured to cause the mobile terminal (14) to notify the driver based on order of priority of first notification information generated at the mobile terminal (14) and second notification information regarding the vehicle (10).

7. The notification system (1) according to claim 1 or 2, further comprising a notification device (15) installed in the vehicle (10), wherein the processor (20) is configured to:
transmit the notification information to the notification device (15); and
cause the notification device (15) to end notification to the driver when the ending condition is satisfied.

8. A vehicle control device (12) comprising a processor (20) configured to:
acquire notification information to be transmitted to a mobile terminal (14) of a driver of a vehicle (10); and
cause the mobile terminal (14) to notify the driver of the notification information until an ending condition for ending notification is satisfied, wherein
the processor (20) is configured to change the ending condition depending on urgency of the notification information.

9. A notification method for a notification system including a mobile terminal (14) that receives notification information for a driver of a vehicle (10) and notifies the driver of the notification information, and a vehicle control device (12) that generates the notification information and transmits the notification information to the mobile terminal (14), the notification method comprising:
causing the mobile terminal (14) to notify the driver of the notification information until an ending condition for ending notification is satisfied; and
changing the ending condition depending on urgency of the notification information.

10. A non-transitory storage medium storing instructions that are executable by one or more processors (20) of a notification system and that cause the one or more processors (20) to perform functions, the notification system including a mobile terminal (14) that receives notification information for a driver of a vehicle (10) and notifies the driver of the notification information, and a vehicle control device (12) that generates the notification information and transmits the notification information to the mobile terminal (14), the functions comprising:
causing the mobile terminal (14) to notify the driver of the notification information until an ending condition for ending notification is satisfied; and
changing the ending condition depending on urgency of the notification information.
